# FASCICULE DE BREVET EUROPEEN

(11) **EP 2 761 531 B1**
(45) Date de publication et mention de la délivrance du brevet: **31.10.2018**
(21) Numéro de dépôt: 12759772.2
(22) Date de dépôt: 21.09.2012
(51) Int. Cl.: G06K 7/10, H04L 27/06

(54) **CONFIGURATION DU TYPE DE MODULATION D'UN ROUTEUR DE COMMUNICATION EN CHAMP PROCHE**
KONFIGURATION DER MODULATIONSART EINES NAHFELDKOMMUNIKATIONSROUTERS
CONFIGURING THE TYPE OF MODULATION FOR A NEAR-FIELD COMMUNICATION ROUTER

(30) Priorité: 30.09.2011 FR 1158817
(43) Date de publication de la demande: 06.08.2014
(73) Titulaire: Proton World International N.V., 1831 Diegem (BE)
(72) Inventeur: RESTIAU, Guy, B-1367 Ramillies (BE); AHSSINI, Youssef, B-1800 Vilvoorde (BE)
(74) Mandataire: Cabinet Beaumont
(86) Numéro de dépôt international: PCT/EP2012/068646
(87) Numéro de publication internationale: WO 2013/045362

(56) Documents cités:
- EP-A1- 2 138 961
- US-A1- 2010 124 258
- US-A1- 2011 142 040
- US-A1- 2011 206 142

## Description

### Domaine de l'invention

La présente invention concerne de façon générale les circuits électroniques et, plus particulièrement, les dispositifs de communication radiofréquence en champ proche. Ces dispositifs sont généralement connus sous la dénomination NFC (Near Field Communication).

### Exposé de l'art antérieur

On trouve de plus en plus de dispositifs de communication radiofréquence susceptibles de fonctionner en champ proche avec un terminal fixe ou un autre dispositif mobile. En particulier, la plupart des dispositifs de télécommunication de type téléphone mobile sont désormais équipés d'un routeur de communication en champ proche (routeur NFC) .

On parle généralement de dispositif NFC fonctionnant en mode carte (ou émulant une carte), par opposition à un deuxième mode de fonctionnement de ces dispositifs qui est d'émuler un lecteur de carte pour coopérer avec un autre dispositif en champ proche. Le dispositif joue alors le rôle de terminal.

Il existe différentes normes de communication en champ proche. Ces normes se distinguent notamment par le type de modulation et de codage de données à transmettre. Auparavant, les transpondeurs étaient le plus souvent dédiés à un type de modulation. Désormais, ils sont conçus pour être en mesure de fonctionner selon différents types de modulation et sont donc configurables pour fixer ce type à chaque nouvelle transaction avec un terminal.

Le type de modulation est la plupart du temps fixé par le terminal et le dispositif de type transpondeur modifie la configuration de son routeur NFC pour être capable de communiquer avec le lecteur.

Habituellement, le routeur ou la tête radiofréquence susceptible de fonctionner selon différentes modulations commute successivement sur ces différentes modulations jusqu'à reconnaître une requête émise par un lecteur. Toutefois, cela prend du temps.

De plus, certains terminaux sont eux-mêmes susceptibles de fonctionner selon différents types de modulation pour être capable de s'adapter à des transpondeurs dédiés à un seul type. Dans ce cas, le terminal envoie successivement des requêtes selon les différents types jusqu'à ce qu'il reçoive une réponse dans un des types. Toutefois, le terminal doit laisser suffisamment de temps entre deux types (généralement de l'ordre de quelques millisecondes) pour qu'un transpondeur configurable ait, de son côté, également le temps de balayer les différents types de modulation jusqu'à ce que les deux configurations (terminal et transpondeur) correspondent.

Un tel processus de configuration est long et présente un risque, pour le dispositif en mode carte, de ne jamais détecter de requête.

Le document US2010/124258 décrit un dispositif semiconducteur et un dispositif de communication dans lequel un circuit logique de réception détermine et décode des types de codes.

Le document US2011/0142040 décrit un dispositif et un procédé de traitement du signal dans lequel on compare la forme d'onde d'un signal émis par un dispositif externe avec plusieurs modèles de symboles différents prédéterminés.

Le document US2011/206142 décrit un protocole pour détecter un type de communication NFC et prévoit que le récepteur puisse être configuré en fonction du type de modulation émis par les moteurs.

### Résumé

Un objet d'un mode de réalisation de la présente invention est de pallier tout ou partie des inconvénients des dispositifs de télécommunication en champ proche usuels en mode carte.

Un autre objet d'un mode de réalisation de la présente invention est de proposer un processus de configuration d'un dispositif en mode carte.

Pour atteindre tout ou partie de ces objets ainsi que d'autres, on prévoit un procédé selon la revendication 1.

Selon un mode de réalisation de la présente invention, si, en notation hexadécimale, le premier symbole est différent de 00 et inférieur à AA, le décodeur est configuré en modulation de type 15693.

Selon un mode de réalisation de la présente invention, si le premier symbole est égal à la valeur FC en notation hexadécimale, le décodeur est configuré en modulation de type A.

Selon un mode de réalisation de la présente invention, si le premier symbole est égal à la valeur AA en notation hexadécimale, le décodeur est configuré en modulation de type C.

On prévoit également un dispositif de réception en champ proche comprenant un circuit tel que ci-dessus.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est une représentation schématique d'un système du type auquel s'appliquent les modes de réalisation qui vont être décrits ;
la figure 2 est un schéma bloc d'un mode de réalisation d'un système de configuration d'un routeur NFC ;
la figure 3 est un chronogramme simplifié illustrant un exemple de signaux modulés reçus par un routeur NFC ;
la figure 4 représente des chronogrammes illustrant les phases initiales de communication selon différents types de modulation susceptibles d'être utilisés par un routeur NFC fonctionnant en mode carte ; et
la figure 5 est un organigramme simplifié d'un mode de configuration d'un routeur NFC.

### Description détaillée

De mêmes éléments ont été désignés par de mêmes références aux différentes figures dont les chronogrammes ont été tracés sans respect d'échelle. Par souci de clarté, seuls les étapes et éléments utiles à la compréhension des modes de réalisation décrits ont été représentés et seront détaillés. En particulier, les circuits de génération des trames de communication selon les différentes normes n'ont pas été détaillés, les modes de réalisation décrits étant compatibles avec les normes usuelles. De plus, la génération de requêtes d'interrogation par un terminal de lecture ou de lecture/écriture n'a pas non plus été détaillée, les modes de réalisation décrits étant là encore compatibles avec les terminaux usuels.

Les modes de réalisation qui vont être décrits visent un routeur NFC fonctionnant en mode carte et sa configuration pour une communication avec un lecteur.

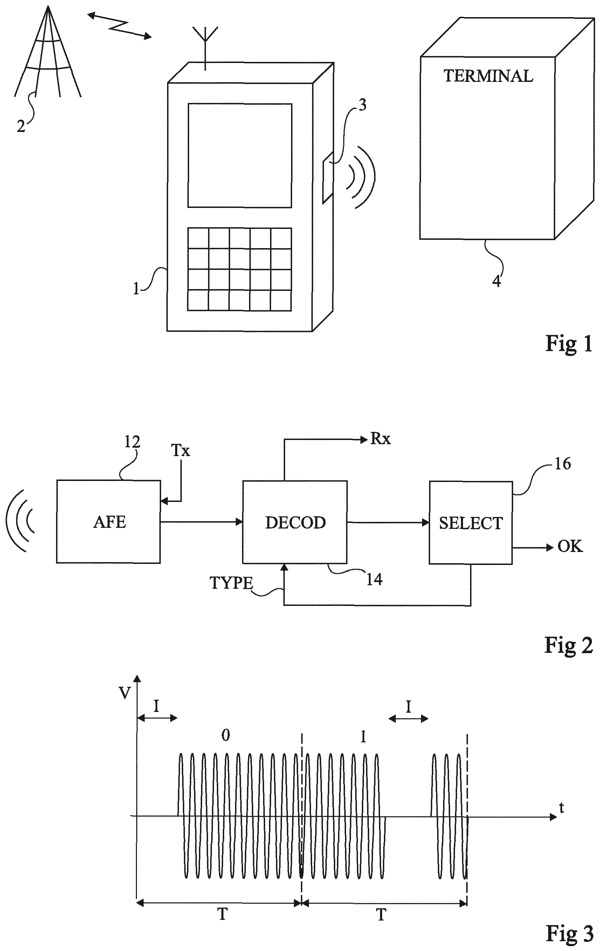

La figure 1 est une représentation schématique d'un exemple de système de communication auquel s'appliquent les modes de réalisation qui vont être décrits.

Un dispositif mobile de télécommunication 1 (par exemple un téléphone mobile de type GSM) est susceptible de communiquer avec un réseau symbolisé par une antenne 2. Ce dispositif 1 est, par ailleurs, équipé d'un routeur de communication en champ proche 3 susceptible de communiquer avec un terminal 4 (TERMINAL) de génération d'un champ radiofréquence.

Le plus souvent, un dispositif 1 équipé d'un routeur NFC est susceptible de fonctionner à la fois en mode dit lecteur et en mode dit carte. En mode lecteur, le dispositif 1 et son routeur NFC 3 jouent le rôle d'un terminal de lecture et d'écriture d'un autre dispositif de communication en champ proche. En mode carte, le dispositif mobile fonctionne comme un transpondeur électromagnétique ou une carte à puce sans contact pour communiquer avec un terminal 4. Il existe de nombreuses variantes de dispositifs de télécommunication équipés d'un routeur NFC mais tous utilisent le même principe : lorsqu'ils fonctionnent en mode carte et sont à portée d'un terminal de communication en champ proche, ils attendent une requête de ce terminal afin d'y répondre.

Les modes de réalisation qui vont être décrits par la suite se réfèrent plus particulièrement à des dispositifs intégrant à la fois des moyens de communication en champ proche (NFC) et de télécommunication. Les solutions décrites s'appliquent toutefois plus généralement à tout dispositif de communication en champ proche susceptible de fonctionner selon plusieurs types ou normes de modulation.

Lorsqu'un tel dispositif se retrouve à portée d'un terminal, il bascule successivement sur les différents types de modulation avec lesquels il est susceptible de fonctionner afin de détecter le type selon lequel le terminal envoie sa requête et d'être en mesure d'entamer une communication en champ proche avec celui-ci.

Dans certains cas, le terminal lui-même est susceptible de fonctionner selon différents types. Dans ce cas, il commence par envoyer une requête selon un premier type de communication ou de modulation puis, en l'absence de réponse d'un transpondeur, bascule sur un autre type, et ainsi de suite. Côté terminal, ce fonctionnement se poursuit en boucle tant qu'il n'a pas reçu de réponse d'un transpondeur.

Ces solutions usuelles prennent du temps avant que la communication puisse débuter. De plus, il y a un risque de ne pas détecter le type de modulation.

Ce problème devient de plus en plus sensible avec l'apparition des routeurs NFC susceptibles de fonctionner selon plusieurs types de modulation et la multiplicité des terminaux multistandard.

Les modes de réalisation qui vont être décrits tirent profit des particularités des normes de communication en champ proche les plus fréquentes pour raccourcir le temps de détection du type de modulation et éviter les situations dans lesquelles aucun type n'est détecté.

Toute transmission d'un terminal de communication en champ proche vers un transpondeur (on fera ci-après référence à une carte) s'effectue en modulation d'amplitude. La différence entre les types de modulation vient du codage de la transmission modulation d'amplitude pour transmettre les bits.

La figure 2 est un schéma bloc simplifié d'un mode de réalisation d'un dispositif de sélection du type de modulation. La représentation de la figure 2 est schématique et fonctionnelle.

On suppose que le routeur NFC comporte une tête de réception analogique 12 (AFE - Analog Front End) équipée de moyens de réception des signaux radiofréquences. Dans l'exemple de la figure 2, on suppose en outre que la tête analogique 12 est équipée de moyens (symbolisés par un signal Tx) permettant d'émettre à destination du terminal. Généralement, on parle de rétromodulation du transpondeur vers le terminal. Une sortie de la tête 12 est envoyée sur un démodulateur/décodeur 14 (DECOD) des signaux reçus. Il s'agit, par exemple, d'un circuit de démodulation d'amplitude associé à un décodeur numérique. Ce décodeur 14 fournit les signaux reçus (Rx) aux autres circuits du dispositif mobile de télécommunication (non représentés). Selon le mode de réalisation représenté en figure 2, le circuit 14 fournit également le signal démodulé à un bloc 16 (SELECT) de sélection du type (TYPE) de modulation reçue.

Le rôle du décodeur 14 est, à partir d'un type de modulation sur lequel il est initialement configuré, de détecter le type réel de modulation du signal reçu de la tête 12, de façon à, une fois le type sélectionné par le bloc 16, configurer le décodeur 14 pour le reste de la transmission.

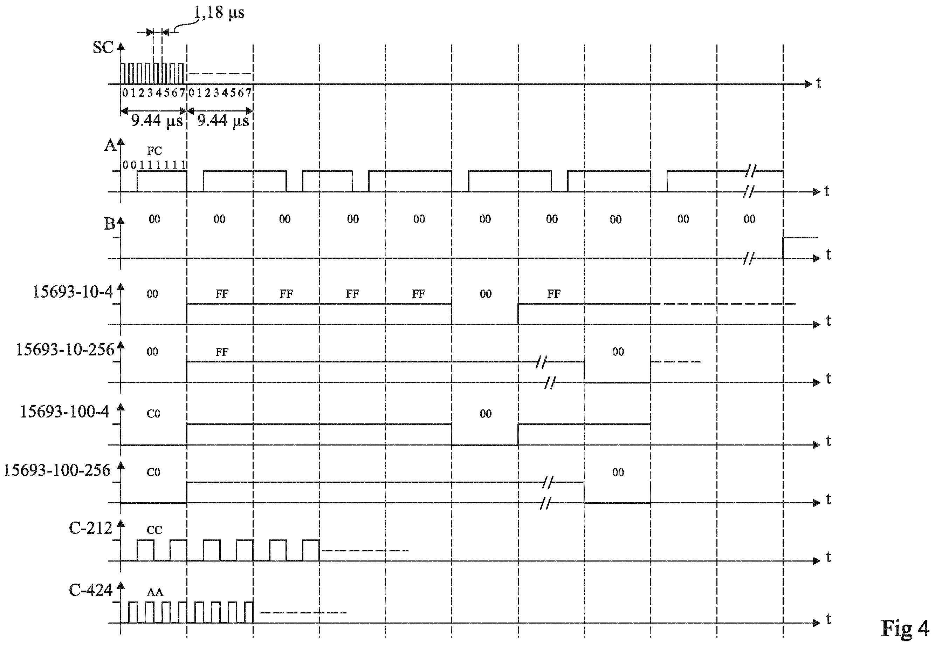

Comme cela va être expliqué par la suite en relation avec la figure 4, on prévoit d'exploiter un décodage basé sur une modulation dite de type B pour détecter les différents types de modulation susceptibles d'être reçus.

Dans les routeurs NFC, les communications radiofréquences sont basées sur des normes respectant une fréquence de porteuse d'environ 13,56 MHz. Les transmissions du terminal vers le transpondeur sont modulées en amplitude principalement selon quatre familles de types, désignées type A, type B, type C et type 15693 (normes ISO 14443). Les différents types se distinguent entre autres par le débit de transmission, l'index de modulation de la porteuse et le codage des données.

Le débit de transmission des types A et B est de 106 kbits/s, 212 kbits/s, 424 kbits/s ou 848 kbits/s. Le débit de transmission du type C est de 212 kbits/s ou 424 kbits/s. Le débit du type 15693 est de 6,64 kbits par seconde ou 26,48 kbits/s.

L'index de modulation du type A est 100 %. L'index de modulation du type B est 10 %. Le type C a un index de modulation compris entre 8 et 30 %. Le type 15693 a un index de modulation de 100 % (type noté 15693-100) ou de 10 % (type 15693-10). Le type 15693 à 6,64 kbit/s est noté 256 (15693-100-256 et 15693-10-256) et le type 15693 à 26,48 kbit/s est noté 4 (15693-100-4 et 15693-10-4).

La figure 3 illustre, par un chronogramme schématique, un exemple usuel de transmission en modulation d'amplitude de bits d'états 0 et 1 avec une modulation de type A. Ces chronogrammes représentent des exemples d'allure de la tension V récupérée par la tête 12. Ces signaux sont véhiculés par une porteuse à 13,56 MHz et sont modulés en amplitude.

Dans le cas d'une transmission terminal vers transpondeur qui nous préoccupe ici pour détecter, côté transpondeur, le type de modulation émis par le terminal, les bits de données sont, en type A, codés en fonction de la position d'un intervalle I sans modulation (ou à un niveau inférieur au niveau haut de repos pour d'autres types comme le type B) au cours d'une période T déterminée représentant un symbole. Ce type de modulation est une modulation de type ASK (amplitude shift keying). Un bit 0 est décodé si l'impulsion I est en début de période T et un bit 1 est décodé si cette impulsion I n'est pas en début de la période T. La durée de la période T, donc d'un symbole, est d'environ 9,44 microsecondes. La durée de l'impulsion I correspond à la durée du symbole divisé par 4.

La modulation d'amplitude s'effectue en abaissant un niveau haut car les systèmes de communication en champ proche sont, à la base, conçus pour des transpondeurs extrayant l'alimentation des circuits qu'ils comportent du champ haute fréquence et émis par le terminal.

Les modes de réalisation qui vont être décrits tirent profit du fait que, quel que soit le type de modulation, une transmission du terminal vers le transpondeur débute par une phase initiale selon un codage particulier mais avec des symboles ayant tous une durée d'environ 9,44 microsecondes (correspondant à un débit de 106 kbits/s) indépendamment du type de modulation.

On définit alors un surcodage basé sur une durée unitaire correspondant à la durée d'une période d'une sous-porteuse utilisée par ces systèmes à une fréquence d'environ 847,5 kHz. Cette sous-porteuse est en particulier utilisée pour une rétromodulation du transpondeur vers le terminal.

Le surcodage réalisé revient à échantillonner un symbole d'une durée de 9,44 microsecondes sur 8 bits (d'après la périodicité de la fréquence de la sous-porteuse). On prévoit alors d'interpréter ce surcodage de 8 bits par symbole pour discriminer les différents types de modulation. En d'autres termes, on divise un symbole en 8 et on affecte un état 0 ou 1 à chaque huitième de symbole selon son niveau (relatif) bas ou haut. En pratique, ce décodage est fait par un démodulateur de type B paramétré à environ 847,5 kHz. Il suffit donc d'interpréter différemment la valeur d'un symbole démodulé en type B.

La figure 4 représente des chronogrammes selon différents types de modulation pour illustrer le mode de sélection effectué en relation avec la figure 2. Le premier chronogramme illustre l'allure de la porteuse SC approximativement à 848 kHz (période d'environ 1,18 µs). Les chronogrammes qui suivent illustrent les allures respectives des symboles présents en début de trame respectivement selon les types :
A : symbole représentant un bit réel (106k) en type A (figure 3) ;
B : 10 symboles à 0 suivis de 2 symboles à 1 ;
15693-10 (ou 100)-4 : 1 symbole à l'état bas suivi de 4 symboles à l'état haut, suivi d'un symbole à l'état bas suivi de 2 symboles à l'état haut ;
15693-10(ou 100)-256 : 1 symbole à l'état bas suivi de 6 symboles à l'état haut, suivi d'un symbole à l'état bas ;
C-212 (type C à 212 kbits/s) : alternance d'impulsions représentant les impulsions I d'un type A à 0 et à 1 ; et
C-424 (type C à 424 kbits/s) : alternances de 4 états 0 et 4 états 1 par symbole.

En figure 4, les codes pris par les différents symboles sur 8 bits ont été représentés également en notation hexadécimale.

Les trames, pouvant s'apparenter à des trames d'initialisation, illustrées en figure 4 sont émises pendant des durées relativement longues pour laisser le temps à un transpondeur de détecter la trame. Par exemple :
une trame de type B représente 94 microsecondes ;
une trame de type C-424 représente 112 microsecondes ;
une trame de type C-212 représente 224 microsecondes ; et
une trame 15693 représente environ 75 microsecondes.

Attendre à chaque fois une trame complète pour que le terminal considère une absence de compatibilité avec le transpondeur avant de basculer sur un autre type de modulation prend du temps.

De plus, les applications dans lesquelles les communications en champ proche sont utilisées sont généralement des applications où un utilisateur présente son dispositif à proximité du terminal et dans lequel les transactions doivent être effectuées rapidement.

On prévoit d'exploiter une ou deux durées de 9,44 µs représentant la durée de transmission d'un symbole à 106 kbits/s dans une phase de démarrage, pour déterminer le type de modulation utilisé par le terminal pendant l'envoi de son début de trame.

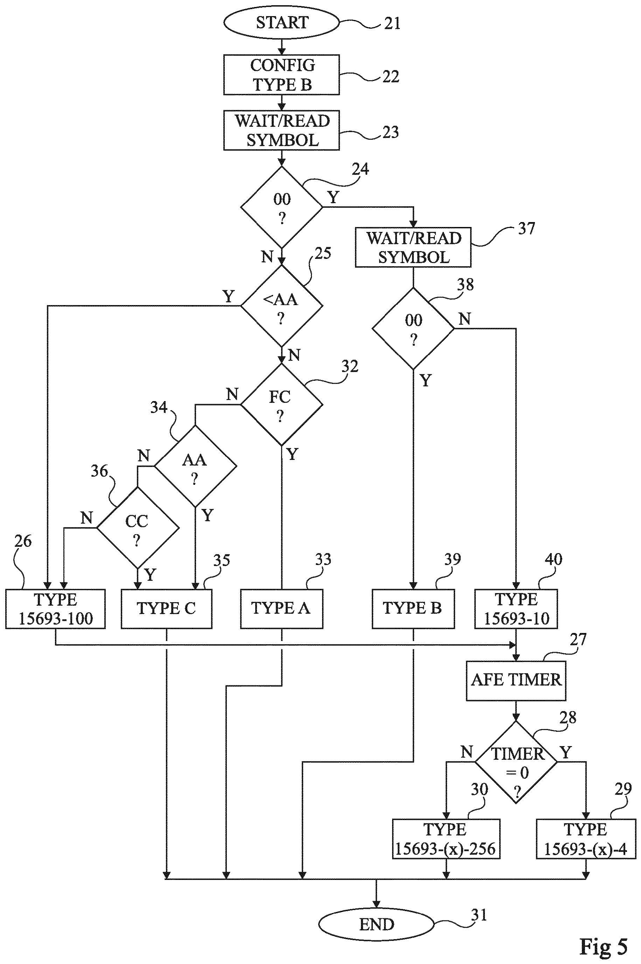

La figure 5 est un organigramme simplifié d'un mode de sélection mis en oeuvre par le sélecteur 16 de la figure 2 pour déterminer le type de modulation émis par un terminal.

Au démarrage du système (bloc 21, START), la tête radiofréquence est réveillée par la réception d'un signal d'un terminal et le sélecteur 16 configure initialement le décodeur 14 pour être en mesure de décoder une modulation de type B en surcodage (bloc 22, CONFIG TYPE B). La configuration de repos du décodeur 14 est donc le type B.

Le décodeur 14 démodule et décode le signal reçu comme s'il s'agissait d'une modulation de type B et envoie les bits reçus au sélecteur 14. Les bits reçus sont en parallèle envoyés vers le reste du circuit du transpondeur mais ne sont pour l'instant pas exploités. En particulier, tant que le sélecteur 16 n'a pas validé le type de modulation par un signal à destination de ces circuits (un bit de validation OK à destination du microcontrôleur du dispositif), le signal Rx n'est pas exploité.

Le sélecteur attend (bloc 23, WAIT/READ SYMBOL) la réception de l'équivalent de 8 bits surcodés (d'un symbole). Cela revient à décoder, en type B, une fenêtre temporelle de 9,44 µs, indépendamment du signal reçu et du codage réalisé par le type de modulation.

Pour simplifier, les valeurs des symboles seront par la suite arbitrairement exprimées en notation hexadécimale.

Une fois les 8 bits reçus et décodés, le sélecteur 16 détermine si ces bits correspondent à un symbole de valeur 00 (bloc 24, 00 ?).

Dans la négative (sortie N du bloc 24), cela signifie que l'on est ni en présence d'une modulation de type B ni en présence d'une modulation 15693 (10) -4. On teste alors (bloc 25, <AA ?) si la valeur du symbole est inférieure à la valeur AA. Dans l'affirmative (sortie Y du bloc 25), cela signifie que l'on est en présence d'une modulation de type 15693-100. Le sélecteur 16 configure alors le décodeur 14 en conséquence (bloc 26, TYPE 15693-100).

Pour être en mesure de distinguer entre le type 15693-100-4 et le type 15693-100-256, on configure (bloc 27, AFE TIMER) le compteur temporel de la tête radiofréquence 12 sur la durée de 4 symboles et on attend la réception du symbole suivant. Si lors de cette réception, le compteur temporel a expiré (sortie Y du bloc 28, TIMER = 0 ?), cela signifie que l'on est en mode 15693-100-4 (bloc 29, TYPE 15693-(x)-4). Dans le cas contraire (sortie N du bloc 28), cela signifie que l'on est sur le type 15693-100-256 (bloc 30, TYPE 15693-(x)-256).

A l'issue de la configuration, le système est en mesure de fournir (bloc 31, END) la trame correctement décodée au reste du dispositif de télécommunication. En effet, la sélection du type qui s'effectue en au plus deux symboles ne nuit pas à la réception et la trame peut être interprétée immédiatement.

Si le premier symbole n'est pas inférieur à la valeur AA (sortie N du bloc 25), cela signifie que l'on est soit en type A soit en type C.

On teste alors (bloc 32, FC ?) si la valeur du symbole est FC. Dans l'affirmative (sortie Y du bloc 32), le sélecteur 16 configure le décodeur 14 sur le type A (bloc 33, TYPE A) . Dans la négative (sortie N du bloc 32), on regarde si le symbole vaut AA (bloc 34, AA ?). Si oui, cela signifie que l'on est en présence d'une modulation de type C-424 (bloc 35, TYPE C) . Sinon, on vérifie si la valeur du symbole est CC (bloc 36, CC?). Si oui (sortie Y du bloc 36), c'est que le type est C-212 et on configure le décodeur en type C (bloc 35, TYPE C). Sinon, cela signifie que l'on est en présence d'une modulation 15693-100 et on revient au bloc 26 pour couvrir le reste des symboles incertains.

Si le premier symbole vaut 00 (sortie Y du bloc 24), on attend la réception du symbole suivant (bloc 37, WAIT/READ SYMBOL) d'une durée de 9,44 µs pour différencier un type B d'une modulation 15693. On compare la valeur de ce second symbole à la valeur nulle (bloc 38, 00 ?). Si c'est le cas, cela signifie que l'on est en présence d'une modulation de type B et on configure alors le décodeur de façon appropriée (bloc 39, TYPE B). Dans la négative (sortie N du bloc 38), cela signifie que l'on est en présence d'une modulation de type 15693-10 (bloc 40, TYPE 15693-10) et on configure le décodeur de façon appropriée.

Une fois le décodeur configuré en type 15693-10, on effectue comme en sortie du bloc 26 les opérations du bloc 27 à 30 pour déterminer s'il s'agit d'une modulation de type 4 ou de type 256.

En figure 5, les sorties des configurations en type B, en type C et en type 15693 conduisent au bloc 31. De préférence, la configuration de type A (sortie du bloc 33) est traitée différemment.

Il ressort de la description qui précède qu'en interprétant au plus deux fenêtres temporelles consécutives dont la durée correspond à celle d'un symbole des trames d'initialisation, on est en mesure de configurer le récepteur quel que soit le type de modulation parmi les types ci-dessus en interprétant le symbole comme s'il était surcodé sur 8 bits.

Il n'est donc plus nécessaire d'attendre la fin d'une trame, ni un basculement du terminal vers un autre type de modulation. Dès qu'il est correctement configuré d'après le procédé de la figure 5, le dispositif en mode carte répond au terminal en utilisant le bon type de rétromodulation, fonction du type de modulation.

Ce procédé peut être exploité, soit pour configurer un dispositif en champ proche alors qu'un terminal n'émet que selon un type de modulation, soit pour adapter la modulation de ce dispositif en champ proche par rapport à un terminal balayant les différents types de modulation. Dans les deux cas, les dispositifs sont capables ensuite de communiquer entre eux.

Ce procédé peut être exploité soit pour configurer un dispositif en champ proche alors qu'un terminal n'émet que selon un type de modulation, soit pour adapter la modulation de ce dispositif en champ proche par rapport à un terminal balayant les différents types de modulation. Dans les deux cas, les dispositifs sont capables ensuite de communiquer entre eux.

Une fois le type identifié par le sélecteur, le dispositif mobile de télécommunication est configuré pour envoyer un message d'accusé-réception au terminal. Recevant cette réponse, le terminal sait que le transpondeur est capable d'interpréter la modulation qu'il émet.

Dans un mode de réalisation simplifié, le procédé décrit ci-dessous se contente de détecter certains des types de modulation décrits.

Par exemple, pour un dispositif ne fonctionnant que selon les types B et 15693, seuls les tests 24, 25 et 38 seront effectués, et en cas de sortie négative du test 25, le dispositif ne répond pas et attend que le terminal bascule sur un autre type de modulation.

Par ailleurs, l'ordre des tests pourra être modifié.

Divers modes de réalisation ont été décrits. Diverses variantes et modifications apparaîtront à l'homme de l'art. En particulier, le choix des types détectés par la mise en oeuvre de ces modes de réalisation dépend du dispositif mobile de télécommunication concerné, pourvu que celui-ci soit capable de décoder au moins une modulation de type B.

De plus, la mise en oeuvre pratique des modes de réalisation décrits est à la portée de l'homme du métier à partir des indications fonctionnelles données ci-dessus. En particulier, l'interprétation des symboles transmis peut être effectuée par les circuits numériques de traitement habituellement présents dans un dispositif comportant un routeur NFC. On veillera toutefois à paramétrer la tête de réception et le décodeur sur une interprétation d'une durée de signal correspondant approximativement à 9,44 microsecondes.

## Revendications

1. Procédé de configuration d'un premier dispositif (1) de communication en champ proche en fonction d'un type de modulation émis par un second dispositif (4), dans lequel :
un décodeur (14) du premier dispositif est configuré (22) pour décoder une modulation de type B en surcodage ;
un signal reçu pendant une première fenêtre temporelle correspondant à la durée d'un symbole d'une trame d'initialisation est découpé en bits et décodé (23) ; le premier dispositif est configuré (16) en fonction de la valeur du symbole décodé pour déterminer le type de modulation ; et dans lequel :
si le premier symbole vaut 00 en notation hexadécimale (24), une seconde fenêtre temporelle de même durée que la première et consécutive à celle-ci est décodée (37) en type B ;
si un second symbole correspondant à la seconde fenêtre temporelle vaut également 00 en notation hexadécimale (38), le décodeur (14) est configuré (39) en modulation de type B ; et
sinon, le décodeur est configuré (40) en modulation de type 15693.

2. Procédé selon la revendication 1, dans lequel ladite durée correspond approximativement à 9,44 microsecondes.

3. Procédé selon la revendication 1 ou 2, dans lequel ledit symbole comporte 8 bits.

4. Procédé selon l'une quelconque des revendications 1 à 3, dans lequel si, en notation hexadécimale, le premier symbole est différent de 00 et inférieur à AA (25), le décodeur (14) est configuré (26) en modulation de type 15693.

5. Procédé selon la revendication 4, dans lequel si le premier symbole est égal à la valeur FC (32) en notation hexadécimale, le décodeur (14) est configuré (33) en modulation de type A.

6. Procédé selon l'une quelconque des revendications 1 à 5, dans lequel si le premier symbole est égal à la valeur AA en notation hexadécimale (34), le décodeur (14) est configuré (35) en modulation de type C.

7. Dispositif de réception en champ proche comprenant un circuit mettant en oeuvre le procédé selon l'une quelconque des revendications précédentes.

## Patentansprüche

1. Verfahren zum Konfigurieren einer ersten Nahfeldkommunikationsvorrichtung (1) gemäß eines Modulationstyps, der von einer zweiten Vorrichtung (4) übertragen wird, wobei:
ein Decoder (14) der ersten Vorrichtung konfiguriert ist (22) zum Decodieren einer übercodierten Typ-B-Modulation;
ein Signal, das während eines ersten Zeitschlitzes empfangen wird, der der Dauer eines Symbols eines Initialisierungsrahmens entspricht, in Bits aufgeteilt und decodiert wird (23); die erste Vorrichtung konfiguriert ist (16) den Modulationstyp gemäß dem Wert des decodierten Symbols zu bestimmen, und wobei:
wenn das erste Symbol in hexadezimaler Schreibweise gleich 00 ist (24), ein zweiter Zeitschlitz mit derselben Dauer wie der erste Zeitschlitz und diesem nachfolgend für den B-Typ decodiert wird (37);
wenn ein zweites Symbol, das dem zweiten Zeitschlitz entspricht, in hexadezimaler Schreibweise ebenfalls gleich 00 ist (38), dann wird der Decoder (14) für die B-Typ Modulation konfiguriert (39); und
ansonsten wird der Decoder für die Modulation des Typs 15693 konfiguriert (40).

2. Verfahren nach Anspruch 1, wobei die Dauer ungefähr 9,44 Mikrosekunden beträgt.

3. Verfahren nach Anspruch 1 oder 2, wobei das Symbol 8 Bits aufweist.

4. Verfahren nach einem der Ansprüche 1 bis 3, wobei, wenn das erste Symbol in hexadezimaler Schreibweise ungleich 00 und kleiner als AA (25) ist, wird der Decoder (14) für die Modulation des Typs 15693 konfiguriert (26).

5. Verfahren nach Anspruch 4, wobei, wenn das erste Symbol in hexadezimaler Schreibweise gleich dem Wert FC ist (32), wird der Decoder (14) für eine A-Typ Modulation konfiguriert (33).

6. Verfahren nach einem der Ansprüche 1 bis 5, wobei, wenn das erste Symbol in hexadezimaler Schreibweise gleich dem Wert AA ist (34), wird der Decoder (14) für eine C-Typ Modulation konfiguriert (35).

7. Nahfeldempfangsvorrichtung mit einer Schaltung zur Implementierung des Verfahrens nach einem der vorhergehenden Ansprüche.

## Claims

1. A method for configuring a first near-field communication device (1) according to a modulation type transmitted by a second device (4), wherein:
a decoder (14) of the first device is configured (22) to decode an overcoded type-B modulation;
a signal received during a first time slot corresponding to the duration of a symbol of an initialization frame is divided in bits and decoded (23); the first device is configured (16) according to the value of the decoded symbol to determine the modulation type; and wherein:
if the first symbol is 00 in hexadecimal notation (24), a second time slot of same duration as the first one and consecutive thereto is decoded for type B (37);
if a second symbol corresponding to the second time slot is also 00 in hexadecimal notation (38), the decoder (14) is configured (39) for the type-B modulation; and
otherwise, the decoder is configured (40) for the type-15693 modulation.

2. The method of claim 1, wherein said duration approximately corresponds to 9.44 microseconds.

3. The method of claim 1 or 2, wherein said symbol comprises 8 bits.

4. The method of any of claims 1 to 3, wherein if, in hexadecimal notation, the first symbol is different from 00 and smaller than AA (25), the decoder (14) is configured (26) for the 15693-type modulation.

5. The method of claim 4, wherein if the first symbol is equal to value FC (32) in hexadecimal notation, the decoder (14) is configured (33) for the type-A modulation.

6. The method of any of claims 1 to 5, wherein if the first symbol is equal to value AA in hexadecimal notation (34), the decoder (14) is configured (35) for the type-C modulation.

7. A near-field reception device comprising a circuit implementing the method of any of the foregoing claims.
